# EUROPEAN PATENT APPLICATION

(11) **EP 3 062 581 A1**
(43) Date of publication of application: **31.08.2016**
(21) Application number: 15290043.7
(22) Date of filing: 26.02.2015
(51) Int. Cl.: H04W 84/18, H04W 52/02, H04L 29/08

(54) **Method and system for wireless readout of sensor data**

(71) Applicant: ALCATEL LUCENT, 92100 Boulogne-Billancourt (FR)
(72) Inventor: Liekens, Werner Mario, 2018 Antwerpen (BE); De Loof, Jourik, 2018 Antwerpen (BE); Kawsar, Fahim, 2018 Antwerpen (BE); Acer, Utku Gunay, 2018 Antwerpen (BE)
(74) Representative: Plas, Axel Ivo Michel

(57) **Abstract**

According to an embodiment the disclosure relates to a wireless sensor device (100) comprising a state registration module (101) configured to register state information; and a wireless communication stack (111) further comprising a data link layer (103) for communicating frames with a data link layer (153) of a remote device (150). This data link layer (103) is further configured to embed this state information in these frames in order to communicate the state information to the remote device (150).

## Description

### Technical Field

The present disclosure generally relates to the field of wireless sensor networks and more particularly to IP or Internet Protocol enabled sensor networks where the data link layer operates according to the IEEE 802.11 protocol.

### Background

In an IP based sensor network, the sensors are assigned an IP address. This way they can be accessed from anywhere on an IP based Local Area Network (LAN) or Wide Area Network (WAN) such as the internet. Just as with their Zigbee or Z-wave counterparts, these sensors need to regularly communicate sensor state information to another device in the network. As the sensors are typically battery powered, it is further important that power consumption is kept to a minimum.

The Constrained Application Protocol or shortly CoAP is a software protocol on top of the User Datagram Protocol or UDP intended to be used in very simple electronics devices such as sensors. The protocol allows the devices to communicate interactively over the Internet. The basics of the protocol are specified in RFC 7252. Every time a sensor device sends state information using CoAP, a UDP packet is wirelessly transmitted from the device with an overhead of minimum 4 bytes to incorporate the header.

### Summary

It is an object of the current disclosure to further decrease the power consumption of sensor devices.

This object is achieved in a first aspect by a wireless sensor device comprising:
- a state registration module configured to register state information, and
- a wireless communication stack further comprising a data link layer for communicating frames with a data link layer of a remote device.
The data link layer is further configured to embed this state information in the data link layer frames in order to communicate the state information to the remote device.

A wireless sensor is to be understood as a sensor device that relies on an internal power supply, for example from a battery or solar cell. It is thus not connected to the grid. As a consequence, limiting energy consumption is important in order to extend the operational life-time of the device. A wireless sensor is further to be understood as only having a wireless communication stack to communicate the sensor data it has acquired.

The data link layer is also known as layer 2 in the OSI or Open Systems Interconnection model. The data link layer provides data transfer between the wireless sensor device and the node it is communicating with.

It is an advantage that the state information is embedded by the data link layer as this results in a lower energy consumption than when the state information is communicated by higher layers such as for example done by the CoAP protocol. First of all, less data is communicated as higher layer headers are avoided resulting in a first decrease in power consumption. Second, less data packets are communicated over the wireless link because the sensor state information can be incorporated into existing frames be it data or management frames. Therefore, when the sensor device communicates its state information, no additional frame needs to be constructed by the wireless communication stack as the state information is piggybacked onto an existing frame. As the overall protocol interaction is minimized, the sensor's sleep time can be further increased.

Preferably, the wireless communication stack corresponds to an Internet Protocol based wireless communication stack and the data link layer is configured to operate according to the IEEE 802.11 standard.

This way, the wireless sensor device may acquire an IP address and can be discovered in an IP based network.

The state registration module may further determine the state information from sensor data acquired from sensors in the sensor device. This way, the state information is put in the right format for embedding it into the data link layer frames. The state information may for example by a few bytes or by one byte or less.

According to a first exemplary embodiment, the data link layer is further configured to embed the state information in a Last Vendor Specific Field of a Probe Request Frame type as specified by the IEEE 802.11 standard.

Acccording to a second exemplary embodiment, the data link layer is further operable according the Wi-Fi Direct standard specifying a peer-to-peer attribute in a peer-to-peer information element in a frame. The data link layer is then further configured to embed the state information in such peer-to-peer attribute.

Advantageously, the state registration module is further configured to request the data link layer to transmit the state information when this state information has changed. This way, power consumption is further reduced by only communicating changes in state information.

According to a second aspect, the disclosure relates to a method for communicating state information from a sensor device wirelessly to another communication device comprising the following steps:
- registering state information in the sensor device; and
- embedding the state information at a data link layer of the sensor device in a frame; and
- sending the frame to the communication device.

According to a third aspect, the disclosure relates to a communication device comprising:
- a wireless communication stack further comprising a data link layer for communicating frames with a data link layer of a remote wireless sensor device;
- a state extraction module configured to detect the presence of state information embedded in these frames and extract the state information from the frames.

According to an embodiment, the communication device further comprises a network interface configured to embed the state information as payload data in an Internet Protocol or IP packet and to transmit the packet over a network to a remote networking device.

As a data link layer can only establish communication with a neighbouring node, the communication device extracts the state information and embeds it into a regular IP packet. This way, the state information may be communicated to any IP device within an IP based network.

### Brief Description of the Drawings

Fig. 1 illustrates a wireless sensor device and communication device according to an embodiment of the invention; and
Fig. 2 illustrates a computing system suitable for a wireless sensor device or communication device according to an embodiment of the invention.

### Detailed Description of Embodiment(s)

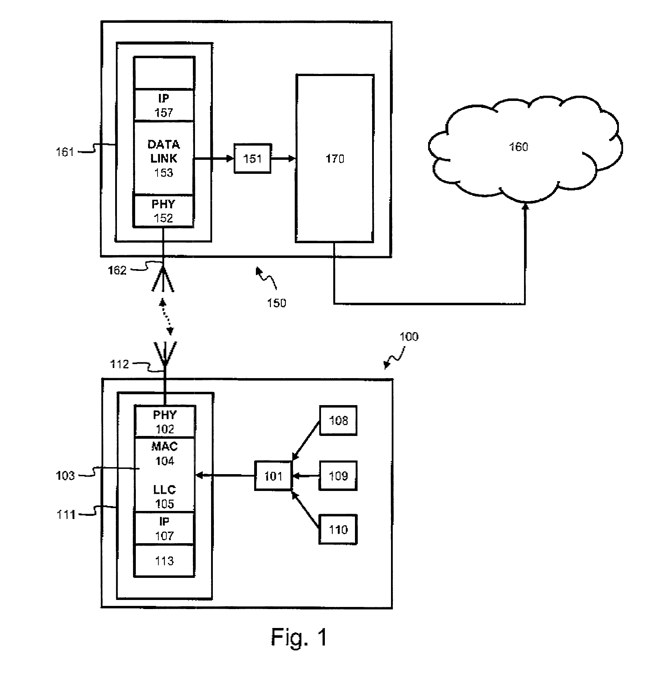

Fig. 1 illustrates a wireless sensor device 100 and a communication device 150 according to an embodiment of the invention. The wireless sensor device 100 comprises one or more sensors 108, 109, 110. Sensor information from the sensors is acquired by the state registration module 101. The module 101 determines from the sensor information sensor state information about the wireless sensor device 100. Such state information may for example be on / off, or free / in use.

When the state information changes, the state registration module 101 informs the data link layer 103 of this change. This data link layer 103 is part of the wireless communication stack 111 in the wireless sensor device 100 and is further logically divided in the MAC or Medium Access Control 104 and Logic Link Control 105 layer. The data link layer implements the IEEE 802.11 standard in order to communicate with remote devices by frames. One type of frames are data frames carrying payload data received from the higher IP or Internet Protocol networking layer. A second type of frames are management frames created within the data link layer 103 and used to exchange information with the data link layer 153 of a remote device 150. Wireless stack 111 may comprise further communication layers 113 on top of IP layer 107 such as a transport layer and application layer.

One type of management frame is the Probe Request Frame featuring a Last Vendor Specific field. According to the present embodiment, the wireless device comprises a modified data link layer 103 such that when the module 101 reports a state change, the layer 103 embeds the state information in the Last Vendor Specific field of such a Probe Request Frame. This frame is then forwarded to the Physical layer 102 and transmitted over antenna 112 to nearby communication devices 150 operating as access point under the IEEE 802.11 standard.

It is thus an advantage that the wireless sensor device 100 communicates sensor state information without creating new data or management frames but piggybacks the state information into an existing frame. Furthermore, no additional header information must be added to the sensor state information. This way, energy is saved and the operational life-time of the wireless sensor device 100 is prolonged.

Fig. 1 illustrates also a communication device 150 according to an embodiment of the invention. This device 150 comprises a wireless communication stack 161 implementing the IEEE 802.11 data link layer 153 and further comprises a PHY layer 152 and IP networking layer 157. The device 150 will receive the Probe Request Frame comprising the sensor state information in its data link layer 153 over the antenna 162 and PHY layer 152. As the sensor state information is embedded in the Last Vendor Specific field, it is extracted by the state extraction module 151. For this purpose the data link layer 153 is configured to forward Probe Request Frame types to the extraction module 151. Payload of data frames is then forwarded to the higher IP networking layer.

The communication device 150 may also comprise a second communication interface 170. This interface 170 connects the device 150 with an IP network 160 such as a Local Area Network (LAN) or a Wide Area Network (WAN), e.g., the internet. When the sensor state information is not destined for the device 150, the state extraction module 151 may forward the state information as an IP data packet to the network interface 170. This way, the sensor state information may be delivered to any IP based networking device connected to the IP network 160.

By the wireless sensor device 100 and access point 150 according to the embodiment of Fig. 1, communication overhead is thus transferred from the sensor device 100 to the access point 150. As an access point is typically not battery-powered, this added overhead by the state extraction module 151 is not an issue. On the other hand, by removing the need for communicating an extra IP packet between the sensor device 100 and the access point 150, energy is saved in the wireless sensor device 100.

According to a second embodiment, the data link layer 103 implements the optional Wi-Fi Direct standard such as for example specified in the WiFi Alliance P2P Technical Specification 1.5. This standard specifies a peer-to-peer attribute or P2P Attribute in a peer-to-peer information element or P2P IE in frame. The data link layer 103 is then further configured to embed the sensor state information received from the state registration module 101 as such a peer-to-peer attribute or P2P Attribute in a peer-to-peer information element or P2P IE in frame.

Similarly, the data link layer 153 of the communication device 150 is then further configured to forward P2P IE in frames to the state extraction module 151 which on its turn extracts the state information from this frame.

A further advantage of this second embodiment is that sensor state information may be communicated by broadcast or point-to-point communication from the wireless sensor device 100 to the communication device 150..

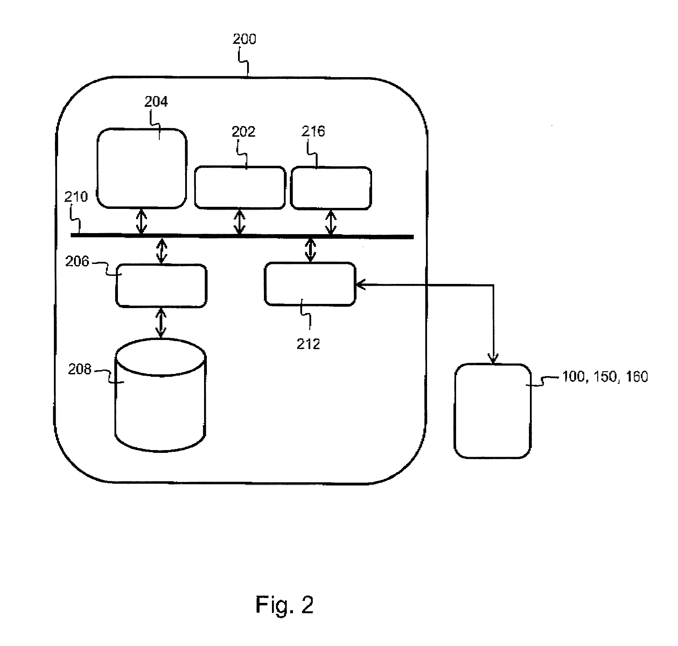

Fig. 2 shows a suitable computing system 200 as a further embodiment of the device 100 or 150. Computing system 200 may in general be formed as a suitable general purpose computer and comprise a bus 210, a processor 202, a local memory 204, one or more optional output interfaces 216, a communication interface 212, a storage element interface 206 and one or more storage elements 208. Bus 210 may comprise one or more conductors that permit communication among the components of the computing system 200. Processor 202 may include any type of conventional processor or microprocessor that interprets and executes programming instructions. Local memory 204 may include a random access memory (RAM) or another type of dynamic storage device that stores information and instructions for execution by processor 202 and/or a read only memory (ROM) or another type of static storage device that stores static information and instructions for use by processor 202. Storage element interface 206 may comprise a storage interface such as for example a Serial Advanced Technology Attachment (SATA) interface or a Small Computer System Interface (SCSI) for connecting bus 210 to one or more storage elements 208, such as one or more local disks, for example SATA disk drives, and control the reading and writing of data to and/or from these storage elements 208. Although the storage elements 208 above is described as a local disk, in general any other suitable computer-readable media such as a solid state drive or flash memory cards could be used. The system 200 described above can also run as a Virtual Machine above the physical hardware.

As further embodiment of the wireless sensor device 100, computing system 200 may be used. Wireless communication stack 111 may then be partly implemented as programming instructions to be run on processor 202. Also data link layer 103 and state registration module 101 may be implemented as programming instructions. Sensors 108, 109 and 110 may further be connected to communication bus 210 in order to allow communication with processor 202 and thus with state registration module 101. Physical layer 102 and antenna interface 112 may be implemented as a network interface 212 communicating over bus 210 with processor 202.

As further embodiment of the communication device 150, computing system 200 may be used. Wireless communication stack 161 may then be partly implemented as programming instructions to be run on processor 202. Also data link layer 153 and state extraction module 151 may be implemented as programming instructions. Physical layer 152 and antenna interface 162 may be implemented as network interface 212 communicating over bus 210 with processor 202. In a similar way, network interface 170 may correspond to another second network interface 212 for communication with network 160.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A wireless sensor device (100) comprising:
- a state registration module (101) configured to register state information; and
- a wireless communication stack (111) further comprising a data link layer (103) for communicating frames with a data link layer (153) of a remote device (150);
further **characterized in that** said data link layer (103) is configured to embed said state information in said frames in order to communicate said state information to said remote device (150).

2. A wireless sensor device according to claim 1 wherein said wireless communication stack corresponds to an Internet Protocol based wireless communication stack.

3. A wireless sensor device according to claim 1 wherein said state registration module is further configured to determine said state information from sensor data acquired by sensors (108, 109, 110) in said sensor device.

4. A wireless sensor device according to claim 1 wherein said data link layer (103) is configured to operate according to the IEEE 802.11 standard.

5. A wireless sensor device according to claim 4 wherein said data link layer (103) is further configured to embed said state information in a Last Vendor Specific Field of a Probe Request Frame type as specified by said standard.

6. Awireless sensordevice according to claim 4 wherein said data link layer (103) is further operable according the Wi-Fi Direct standard specifying a peer-to-peer attribute in a peer-to-peer information element in frame; and wherein said data link layer is further configured to embed said state information in such peer-to-peer attribute.

7. A wireless sensor device according to claim 1 wherein said state registration module (101) is further configured to request said data link layer to transmit said state information when state information has changed.

8. A method for communicating state information from a wireless sensor device wirelessly to another communication device (150) comprising the following steps:
- registering state information in said wireless sensor device (100); and
- embedding said state information at a data link layer (103) of said sensor device in a frame; and
- sending said frame to said communication device (150).

9. A communication device (150) comprising:
- a wireless communication stack (161) further comprising a data link layer (153) for communicating frames with a data link layer (103) of a remote wireless sensor device (100);
- a state extraction module (151) configured to detect the presence of state information embedded in said frames and extract said state information from said frames.

10. A communication device according to claim 9 further comprising a network interface (170) configured to embed said state information as payload data in an Internet Protocol or IP packet and to transmit said packet over a network (160) to a remote networking device.
